Europäisches Patentamt

**European Patent Office**

Office européen des brevets

(19)

(11) Numéro de publication: **0 063 997**
A2

(12) # DEMANDE DE BREVET EUROPEEN

(21) Numéro de dépôt: **82400683.7**

(22) Date de dépôt: **16.04.82**

(51) Int. Cl.³: **A 47 B 47/05**, F 16 B 12/02

(30) Priorité: **16.04.81 FR 8107706**

(43) Date de publication de la demande: **03.11.82**
**Bulletin 82/44**

(84) Etats contractants désignés: **BE CH DE FR GB IT LI**

(71) Demandeur: **Dudouyt, Jean-Paul, Les Camélias Place des Palmiers, F-44500 La Baule les Pins (FR)**

(72) Inventeur: **Dudouyt, Jean-Paul, Les Camélias Place des Palmiers, F-44500 La Baule les Pins (FR)**

(74) Mandataire: **Chambon, Georges et al, Cabinet Chambon 6 et 8 avenue Salvador Allende, F-93804 Epinay S/Seine Cédex (FR)**

(54) **Montant d'assemblage pour meuble démontable.**

(57) Montant d'assemblage pour meuble démontable.

Selon l'invention, chaque montant d'angle comprend un profilé extérieur (11) en forme générale de cornière dont l'arête est destinée à constituer l'arête correspondante du meuble et un profilé intérieur admettant sensiblement le plan bissecteur de la cornière comme plan de symétrie, le profilé intérieur comportant au moins une partie tubulaire (17a) pouvant recevoir à chacune de ses extrêmités une vis auto-taraudeuse 23 ou tout autre moyen, pour la fixation, à l'extrêmité inférieure, d'un patin ou d'un pied (25) avec, éventuellement, interposition d'une paroi inférieur (26) alors traversée par la vis et, à l'extrêmité supérieure, d'un dessus (29) de meuble ou d'un couvercle coiffant l'extrêmité de la cornière, tandis que l'un au moins des profilés, extérieur (11) ou intérieur, est muni de moyens de retenue interdisant le déplacement latéral des parois formant l'angle correspondant du meuble.

### Montant d'assemblage pour meuble démontable

L'invention concerne des montants d'angle pour meuble démontable, dont la structure est telle que le montage du meuble est effectué par emboîtement et/ou coulissement et que l'ensemble est maintenu fermement assemblé par la mise en place d'une simple vis ou autre moyen de fixation à chacune des extrémités desdits montants, même pour un meuble de dimensions importantes.

Selon l'invention, chaque montant comprend un profilé extérieur en forme générale de cornière dont l'arête est destinée à constituer l'arête correspondante du meuble et un profilé intérieur admettant sensiblement le plan bissecteur de la cornière comme plan de symétrie, le profilé intérieur comportant au moins une partie tubulaire pouvant recevoir à chacune de ses extrémités une vis auto-taraudeuse ou tout autre moyen,pour la fixation, à l'extrémité inférieure, d'un patin ou d'un pied avec, éventuellement, interposition d'une paroi inférieure alors traversée par la vis et, à l'extrémité supérieure, d'un dessus de meuble ou d'un couvercle coiffant l'extrémité de la cornière, tandis que l'un au moins des profilés, extérieur ou intérieur, est muni de moyens de retenue interdisant le déplacement latéral des parois formant l'angle correspondant du meuble.

Les deux profilés, intérieur et extérieur de chaque montant peuvent être d'une seule pièce ou non. Dans le second cas, ils peuvent être simplement juxtaposés ou assemblés par coulissement.

Une telle structure permet non seulement un montage extrêmement facile et rapide mais aussi de multiples combinaisons pour les rayonnages, les étagères, les armoires, les tables, les bureaux et même des sièges.

L'invention sera mieux comprise à la lecture de la description qui va suivre et à l'examen du dessin annexé qui représente, de façon non limitative, diverses variantes d'un montant selon l'invention et dans lequel :

- la figure 1 est une perspective d'un corps d'armoire ;

- la figure 2 montre, en perspective, un tronçon de montant selon un mode préféré de réalisation avec, au-dessus, un élément de paroi destiné à s'emboîter dans ledit tronçon ;

- les figures 3 à 8 représentent chacune une variante du montant avec des profilés intérieur et extérieur séparés (figures 3 et 6), juxtaposés (figure 4), emboîtés (figure 7) ou venus d'une seule pièce (figures 5 et 8) ;

— la figure 9 montre, en perspective, l'application de l'invention pour le montage d'une table-bureau.

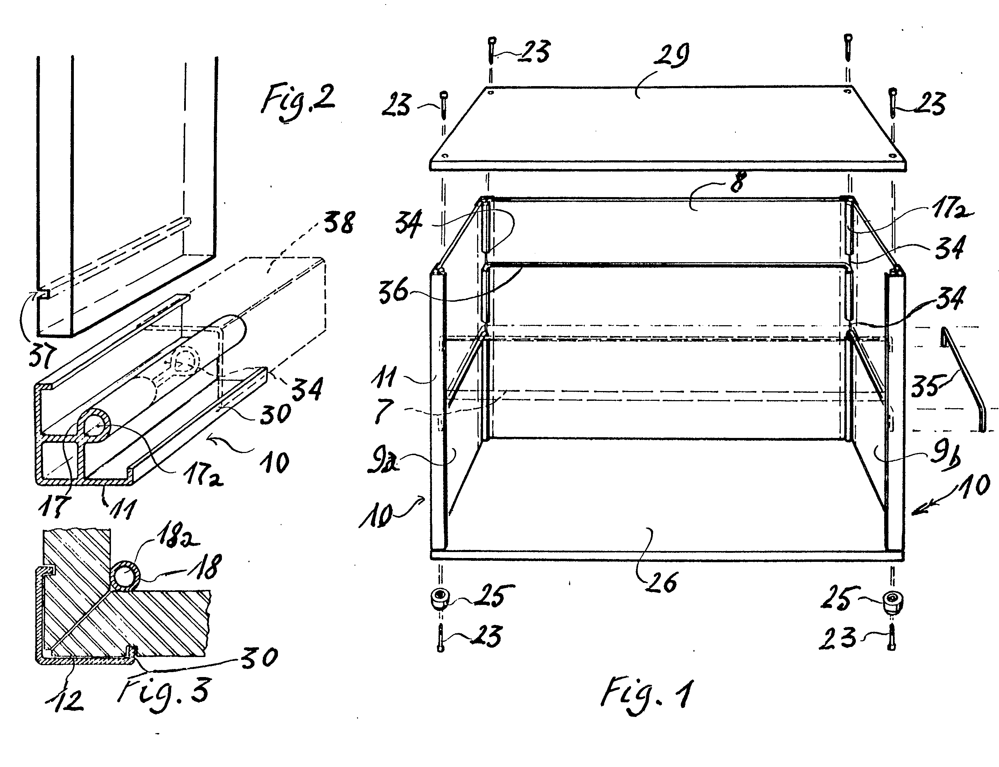

A la figure 1 le corps parallélépipédique d'une armoire est constitué par deux parois latérales 9a et 9b, une paroi arrière ou dos 8, une paroi inférieure 26 et un dessus 29. Ces divers éléments sont assemblés par quatre montants d'angle 10. Bien entendu, les faces intérieures de la paroi inférieure 26 et du dessus 29 peuvent être munies, au voisinage des montants 10 avant, de crapaudines destinées à recevoir les gonds de portes, non représentées.

Chaque montant 10 comporte un profilé extérieur en forme générale de cornière dont l'arête constitue l'arête correspondante de l'armoire et un profilé intérieur, les bords des parois latérales et arrière venant s'appliquer sur les faces intérieures des ailes de la cornière et enserrant le profilé intérieur.

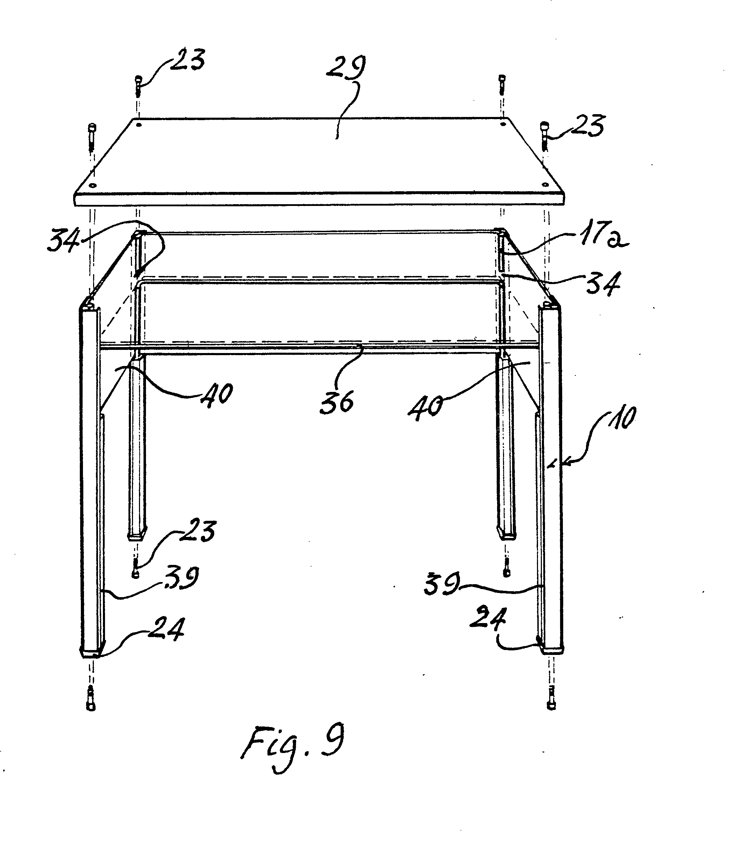

Les figures 2 à 8 montrent divers modes de réalisation des profilés extérieur et intérieur. Dans tous les cas le profilé intérieur (17 à 21) s'étend rigidement sur toute la longueur du montant et comporte, au moins à chaque extrêmité, une partie tubulaire (17a à 21a) destinée à recevoir une vis auto-taraudeuse 23. Dans le cas de l'armoire de la figure 1 ou de la table-bureau de la figure 9 (voir ci-après), la vis 23 de l'extrêmité supérieure traverse le dessus du meuble 29 et la vis 23 de l'extrêmité inférieure traverse, pour l'armoire figure 1, un pied 25 et la paroi inférieure 26 et, pour la table-bureau figure 9, un simple patin 24.

En outre, des moyens de retenue sont prévus sur l'un et/ou l'autre des profilés extérieur et intérieur pour interdire le déplacement latéral des parois.

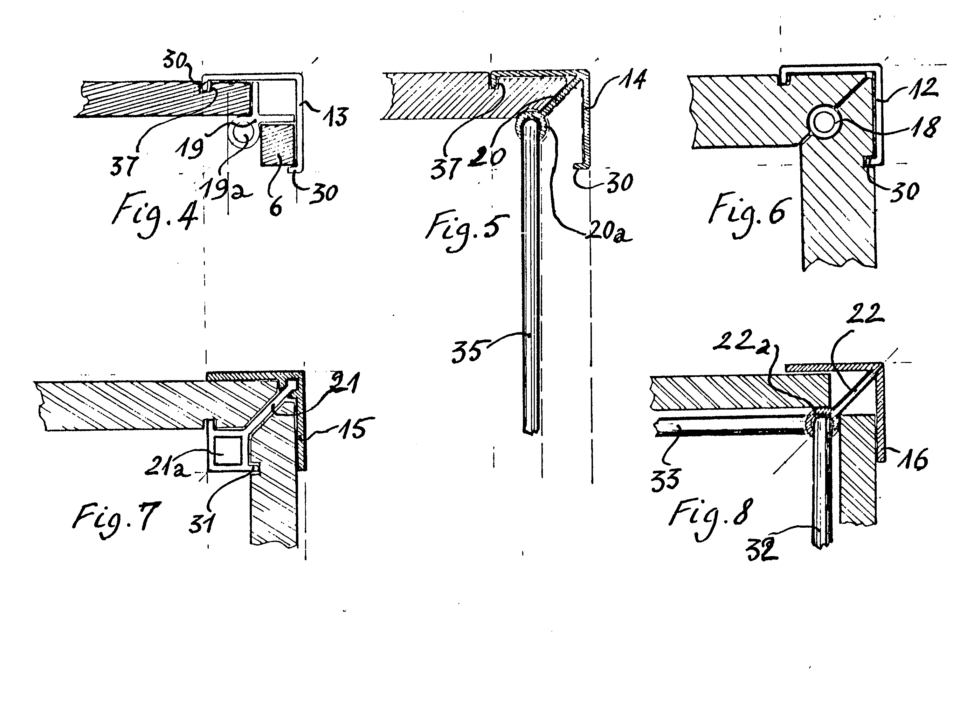

Dans le mode de réalisation le plus simple (figure 3) le profilé extérieur est une cornière 12 dont chacune des ailes présente un bord 30 replié à 90° vers l'intérieur pour coopérer avec une rainure 37 (figure 2) prévue sur la face extérieure de la paroi correspondante, parallèlement au montant. La jonction des deux parois formant l'angle du meuble est réalisée en onglet et le profilé intérieur est un simple tube 18 appliqué dans l'angle et dont l'alésage 18a est légèrement inférieur au diamètre des vis auto-taraudeuses 23. Dans une variante (figure 6) le chant coupé à 45° de chaque paroi comporte une rainure de section semi- circulaire et le tube 18 est alors logé dans l'épaisseur des parois. On obtient ainsi une meilleure tenue de l'ensemble. Ces deux modes de réalisation sont essentiellement réservées à des meubles du type armoire (figure 1), les tablettes éventuelles 7 étant alors soutenues par des tasseaux classiques ou des "pions" disposés dans des trous prévus sur les faces intérieures des parois latérales. Sur la face avant, côté ouverture, une baguette de section appropriée est coulissée entre le chant à 45° de la paroi latérale et le bord replié 30 opposé de la cornière.

Dans les modes de réalisation des figures 2, 4 et 5, les moyens de retenue des parois sont également constitués par les bords repliés 30 du profilé extérieur 11, 13 ou 14 en forme de cornière, les parois comportant des rainures conjuguées 37.

A la figure 7, ce sont les faces intérieures des parois qui comportent une rainure qui coopère alors avec une nervure longitudinale 31 portée par le profilé intérieur 21 assemblé par coulissement dans l'angle de la cornière. Cette disposition pourrait également être adoptée pour les réalisations des figures 2 et 5, car il suffit que les deux profilés intérieur et extérieur soient solidaires ou solidarisés. Il est encore possible de prévoir, à la fois, des bords repliés 30 et des nervures 31 avec des rainures sur les deux faces des parois.

Dans l'exemple de la figure 4 le profilé intérieur 19 est séparé du profilé extérieur 13, comme dans le cas des figures 3 et 6, ce qui oblige à prévoir une baguette telle que 6 du côté de l'ouverture du meuble. Ici ce profilé apparaît comme une cornière portant, vers l'extérieur, le long de son arête, un tube 19a de section circulaire.

Dans les réalisations selon les figures 2, 5 et 8 les profilés intérieur et extérieur forment un ensemble d'une seule pièce, la partie tubulaire 17a, 20a, 22a étant reliée à la cornière 11, 14, 16 par une cloison simple 20, 22 ou deux parois (figure 2) formant avec les ailes de la cornière 11 un tube accolé de section carrée.

Sauf dans le cas où le profilé intérieur est un simple tube 18 (figures 3 et 6), la partie tubulaire 17a, 19a, 20a, 21a ou 22a peut présenter des solutions de continuité telles que 34 (figures 1, 2 et 9) qui permettent la mise en place de tringles 32, 33, 34, 35, 36 (figures 1, 5, 8 et 9) dont les extrémités sont recourbées à 90° et forment des supports pour des tablettes 7 et/ou des moyens de liaison reliant les montants entre eux et constituant, dans le cas de la figure 8, les seuls moyens de retenue interdisant le déplacement des parois.

Tous ces profilés peuvent être obtenus par filage (ou extrusion) par exemple d'aluminium ou d'un alliage d'aluminium, les solutions de continuité 34 résultant alors de fraisage ou de sciage. Pour faciliter la fabrication, notamment lorsque deux parties tubulaires sont accolés (cas de la figure 2), ce qui nécessite la juxtaposition de deux poinçons, la partie tubulaire 17a destinée à recevoir les vis 23 peut comporter une fente longitudinale, les vis 23 étant alors choisies d'un diamètre un peu plus fort pour obtenir un auto-serrage.

Lorsque le profilé extérieur comporte des bords repliés 30 et que le profilé intérieur est entièrement dans le parallélépipède défini par les ailes du profilé extérieur, comme c'est le cas aux figures 2, 4 et 5, des tronçons 38 de cornières classiques peuvent coulisser dans le profilé extérieur 11, 13 et 14 en étant guidés par les bords repliés 30. On forme ainsi autour du profilé intérieur un tube de section sensiblement carrée (et même carrée si les ailes des tronçons 38 sont légèrement emboutis) formant ainsi un pied tubulaire 39 fermé pour une table ou une table-bureau ou encore des cales d'appui et d'écartement pour des tablettes ou des éléments 40 de paroi (figure 9). On peut ainsi constituer des parois à claire-voie, ou au-dessus de pieds 39, la ceinture d'un bureau "à la française".

Bien d'autres combinaisons sont possibles. Pour un bureau ou une table par exemple, on choisira de préférence le montant de la figure 2 et le dessus 29 sera fixé, non avec des vis 23, mais des coins forcés dans la partie tubulaire de section carrée. Pour d'autres applications, cette partie tubulaire carrée permet, à l'extrêmité inférieure, d'encliqueter l'axe vertical d'une roulette pivotante, tout en laissant libre la partie tubulaire cylindrique 17a pour la vis 23 d'assemblage. Avec des montants avant courts et des montants arrière plus longs, on peut constituer un siège, l'assise apparaissant comme une tablette et le dossier et les accoudoirs comme des parois, l'inclinaison du dossier pouvant résulter de la forme de la garniture de rembourrage de ce dossier.

Par ailleurs, il est clair que l'invention peut s'appliquer au mobilier urbain (bancs publics,....)ainsi qu'aux constructions légères (abris pour file d'attente, guichets de transports en commun, etc.).

REVENDICATIONS

1) Montant d'assemblage pour meuble démontable, caractérisé en ce qu'il comprend un profilé extérieur (11 à 16) en forme générale de cornière dont l'arête est destinée à constituer l'arête correspondante du meuble et un profilé intérieur (17 à 22) admettant sensiblement le plan bissecteur de la cornière comme plan de symétrie, le profilé intérieur comportant au moins une partie tubulaire (17a à 22a) pouvant recevoir à chacune de ses extrémités une vis auto-taraudeuse(23) ou tout autre moyen pour la fixation,à l'extrémité inférieure,d'un patin(24)ou d'un pied (25) avec, éventuellement, interposition d'une paroi inférieure (26) alors traversée par la vis et, à l'extrémité supérieure, d'un dessus (29) de meuble ou d'un couvercle coiffant l'extrémité de la cornière, tandis que l'un au moins des profilés, extérieur (11 à 16) ou intérieur (17 à 22), est muni de moyens (30, 31, 32, 33) de retenue interdisant le déplacement latéral des parois formant l'angle correspondant du meuble.

2) Montant d'assemblage selon la revendication 1, caractérisé en ce que les profilés extérieur (11, 14, 16) et intérieur (17, 20, 22) sont d'une seule pièce.

3) Montant d'assemblage, selon la revendication 1, caractérisé en ce que le profilé intérieur (21) est assemblé avec le profilé extérieur (15) par coulissement dans l'angle de ce dernier.

4) Montant d'assemblage selon la revendication 1, caractérisé en ce que la partie tubulaire (17a, 19a, 20a, 21a, 22a) du profilé intérieur est appliquée contre les faces intérieures des parois formant l'angle correspondant du meuble et qu'elle présente des solutions de continuité (34) permettant l'enfilage dans ladite partie tubulaire de l'extrémité recourbée d'une tringle métallique (32, 33, 35, 36) pour constituer un tasseau (35, 36) de tablette et/ou la liaison (32, 33) des montants pour former le moyen de retenue latérale des parois.

5) Montant d'assemblage selon l'une quelconque des revendications 1 à 4, caractérisé en ce que les moyens de retenue, interdisant le déplacement latéral des parois, formant l'angle correspondant du meuble, sont constitués par les bords (30) rabattus à 90° vers l'intérieur, des ailes du profilé extérieur en forme de cornière, coopérant chacun avec une rainure (37) ménagée sur la face extérieure de la paroi correspondante.

6) Montant d'assemblage selon la revendication 5, <u>caractéri-sé</u> en ce que le profilé intérieur fixe (17, 20) ou mobile (19) est logé en totalité dans l'espace parallélépipédique dont deux côtés adjacents sont constitués par les ailes du profilé extérieur (11, 13, 14) en forme de cornière et que dans ce profilé coulissent, maintenus par les bords rabattus, des tronçons (38) de cornières classiques pour constituer des pieds fermés (39) et/ou des cales d'appui et d'écartement de tablettes ou d'éléments de parois (40).

0063997

1/3

Fig. 1

Fig. 2

Fig. 3

Fig. 4

Fig. 5

Fig. 6

Fig. 7

Fig. 8

2/3

0063997

Fig. 9